# DEMANDE DE BREVET EUROPEEN

(11) **EP 4 804 075 A1**
(43) Date de publication de la demande: **09.09.2026**
(21) Numéro de dépôt: 26156891.9
(22) Date de dépôt: 06.02.2026
(51) Int. Cl.: G06F 40/263, G06F 40/58, G06V 20/56, G06V 20/58, G08G 1/0962, B60K 35/22

(54) **SYSTÈME ET PROCÉDÉ EMBARQUÉS POUR LE TRAITEMENT D'INFORMATIONS TEXTUELLES ISSUES DE L'ENVIRONNEMENT ROUTIER D'UN VÉHICULE AUTOMOBILE**

(30) Priorité: 06.03.2025 FR 2502274
(71) Demandeur: AMPERE s.a.s., 92100 Boulougne-Billancourt (FR)
(72) Inventeur: La désignation de l'inventeur n'a pas encore été déposée
(74) Mandataire: Renault Group

(57) **Abrégé**

La présente invention concerne un système embarqué pour véhicule automobile, comprenant au moins un module de prise de vues (3) configuré pour acquérir des données visuelles (7) d'un environnement routier (4), au moins un module d'analyse (10) configuré pour détecter des informations textuelles (16a) à partir des données visuelles (7) acquises et transmettre lesdites informations textuelles (16a) à au moins un module de gestion multimédia (11), au moins un module de gestion multimédia (11) configuré pour recevoir les informations textuelles détectées (16a), traduire lesdites informations textuelles détectées (16a) en fonction d'une langue cible déterminée par au moins un module de géolocalisation (12), et transmettre les informations textuelles traduites (16b) à au moins un module d'affichage (13), au moins un module de géolocalisation (12) configuré pour déterminer une langue source pour la traduction des informations textuelles détectées (16a) à partir de paramètres contextuels (20) liés au véhicule (1), et au moins un module d'affichage (13) configuré pour recevoir et afficher les informations textuelles traduites (16b) en fonction desdits paramètres contextuels (20) liés au véhicule (1).

## Description

### Domaine technique

La présente invention concerne le domaine des systèmes embarqués d'aide à la conduite.

Plus particulièrement, elle porte sur le traitement des informations textuelles détectées sur des panneaux de signalisation ou sur tout autre élément textuel visible dans l'environnement routier d'un véhicule automobile.

### Techniques antérieures

Les véhicules automobiles s'équipent de plus en plus de capteurs externes, dont des caméras en faveur des systèmes avancés d'aide à la conduite.

Ces caméras, en constante amélioration, offrent des résolutions accrues permettant d'acquérir davantage d'informations visuelles et ce, de manière précise.

Lorsqu'un véhicule automobile traverse des régions où la langue des panneaux de signalisation ou des informations routières diffère de celle du conducteur, il peut être difficile pour ce dernier d'interpréter rapidement et précisément ces informations. Cette situation peut entraîner des erreurs de compréhension ou des décisions tardives, augmentant les risques pour la sécurité.

Il serait donc particulièrement utile de s'appuyer sur ces caméras embarquées pour reconnaître et traduire les textes présents dans l'environnement routier, par exemple des textes situés autour des panneaux de signalisation, des textes situés sur les panneaux de signalisation ou encore des textes à l'entrée ou à l'intérieur de zones de stationnement.

Toutefois, il existe dans l'art antérieur diverses solutions permettant de traduire des informations textuelles issues de l'environnement d'un utilisateur afin d'en faciliter l'interprétation.

Certaines solutions proposent d'analyser les informations textuelles en utilisant des algorithmes de traitement linguistique avancés. Ces méthodes permettent notamment de prédire les informations textuelles dans une langue cible à partir d'un texte source.

Ces solutions existantes sont généralement adaptées à des applications dans lesquelles l'environnement reste stable et peu évolutif, sans considération pour les contraintes spécifiques du trafic routier.

D'autres approches exploitent des dispositifs électroniques capables d'extraire des textes à partir d'images pour les traduire, mais ces systèmes sont principalement conçus pour des usages éloignés du contexte automobile et nécessitent souvent une intervention manuelle, comme la capture d'une image par l'utilisateur avant son traitement.

Or, sur autoroute, par exemple, l'affichage des informations textuelles doit se concentrer sur une restitution rapide et simplifiée des panneaux réglementaires afin d'assurer une lecture immédiate, tandis que dans des zones à faible vitesse, comme les parkings ou les péages, un affichage plus détaillé et interactif peut être privilégié, permettant au conducteur d'examiner des informations contextuelles sans nuire à sa conduite.

Par conséquent, aucune des solutions existantes ne répond aux besoins des conducteurs, qui exigent que les informations soient détectées et traduites en tenant compte entre autres des conditions de circulation et de l'environnement routier.

### Exposé de l'invention

La présente invention vise donc à pallier tout ou partie des inconvénients précités et a pour objet un système embarqué pour véhicule automobile comprenant au moins un module de prise de vues configuré pour acquérir des données visuelles d'un environnement routier, au moins un module d'analyse configuré pour détecter des informations textuelles à partir des données visuelles acquises et transmettre ces informations à un module de gestion multimédia, au moins un module de gestion multimédia configuré pour recevoir les informations textuelles détectées, traduire lesdites informations textuelles détectées en fonction d'une langue source déterminée par au moins un module de géolocalisation, et transmettre les informations textuelles traduites à au moins un module d'affichage, au moins un module de géolocalisation configuré pour déterminer la langue source pour la traduction des informations textuelles détectées en fonction de paramètres contextuels liés au véhicule, et au moins un module d'affichage configuré pour recevoir et afficher les informations textuelles traduites en fonction desdits paramètres contextuels.

Ainsi, l'invention permet de détecter et de traduire automatiquement les informations textuelles de l'environnement routier, en fournissant aux conducteurs une interprétation fiable des indications essentielles à la conduite adaptées aux conditions de circulation et aux paramètres contextuels du véhicule.

En outre, les paramètres contextuels comprennent au moins la vitesse du véhicule, les données de géolocalisation ou la nature de l'environnement routier.

De plus, le module d'affichage du système embarqué comprend un écran central configuré pour permettre un accès en différé aux données visuelles acquises et aux informations textuelles traduites et/ou une interface d'affichage conducteur configurée pour afficher en temps réel les informations textuelles traduites associées aux panneaux de signalisation réglementaires détectés.

Selon une caractéristique de l'invention, le module d'analyse du système embarqué peut comprendre un sous-module de filtrage contextuel configuré pour sélectionner les panneaux réglementaires parmi l'ensemble des panneaux de signalisation détectés dans les données visuelles, en fonction des paramètres contextuels.

De plus, le module d'analyse peut comprendre un sous-module d'encodage de données visuelles, configuré pour encoder les informations textuelles détectées dans un format standardisé.

Le module de gestion multimédia comprend par exemple une mémoire tampon pour permettre l'enregistrement des données visuelles acquises et des informations textuelles détectées et un accès différé aux informations textuelles traduites depuis le module d'affichage

Par ailleurs, le module de gestion multimédia comprend un sous-module de remplacement des informations textuelles, configuré pour identifier une zone contenant l'information textuelle détectée dans les données visuelles acquises par le module de prise de vues et remplacer l'information textuelle détectée par l'information textuelle traduite en appliquant un masque numérique sur la zone détectée.

Selon une autre caractéristique de l'invention, l'écran central du module d'affichage comprend une interface de contrôle permettant de sélectionner les données visuelles acquises par l'au moins un module de prise de vues, de naviguer dans les données visuelles acquises via des commandes de rembobinage et d'avance rapide, de zoomer sur les informations textuelles détectées, et d'activer ou désactiver la traduction des informations textuelles détectées.

Un autre objet de l'invention concerne un procédé de traitement d'informations textuelles issues d'un environnement routier, mis en œuvre par un système embarqué tel que défini précédemment, ledit procédé comprenant les étapes suivantes :
- acquérir des données visuelles d'un environnement routier à l'aide d'au moins un module de prise de vues,
- analyser les données visuelles à partir d'au moins un module d'analyse pour détecter des informations textuelles,
- transmettre les informations textuelles détectées à au moins un module de gestion multimédia,
- traduire les informations textuelles détectées à partir des paramètres contextuels reçus d'au moins un module de géolocalisation,
- transmettre les informations textuelles traduites à au moins un module d'affichage,
- afficher les informations textuelles traduites en fonction desdits paramètres contextuels.

Enfin, un autre objet de l'invention porte sur un véhicule automobile comprenant un système embarqué tel que défini précédemment.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- la [Fig.1] illustre un véhicule automobile conforme à l'invention, ainsi que son environnement routier ;
- la [Fig.2] illustre l'architecture fonctionnelle des modules du système embarqué selon un premier mode de réalisation ;
- la [Fig.3] présente le premier mode d'affichage des informations textuelles traduites sur l'écran central du véhicule ;
- la [Fig.4] illustre l'architecture fonctionnelle des modules du système embarqué selon un second mode de réalisation, adapté à la conduite à vitesse élevée et intégrant des variantes structurelles et fonctionnelles spécifiques
- la [Fig.5] représente le second mode d'affichage des informations textuelles traduites sur le tableau de bord numérique du véhicule, selon le second mode de réalisation.

### Description détaillée

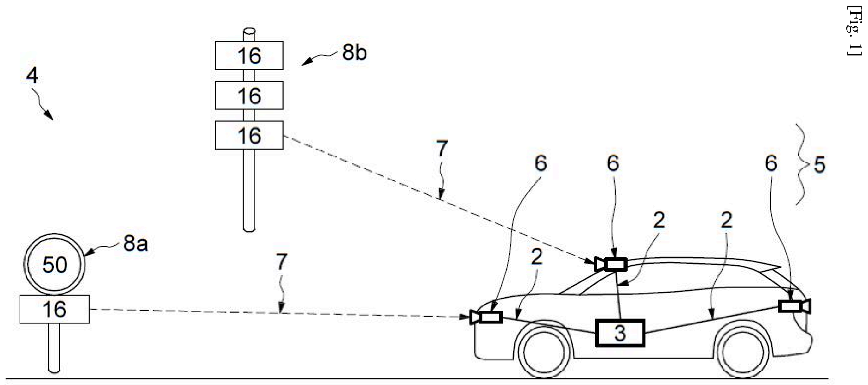

On a représenté sur la [Fig.1] un véhicule automobile conforme à l'invention, désigné par la référence numérique générale 1, ainsi que son environnement routier 4.

Un tel véhicule 1 peut intégrer une architecture électronique complexe conçue pour répondre aux besoins de sécurité et de confort des utilisateurs.

Cette architecture repose sur des bus ou réseaux de communication embarqués 2 tels que le CAN (Controller Area Network) ou l'Ethernet automobile pour les données critiques, le LVDS (Low Voltage Differential Signaling) pour les flux vidéo, ou encore le LIN (Local Interconnect Network) pour les systèmes périphériques.

Ces bus de communication 2 permettent entre autres d'interconnecter plusieurs calculateurs, qui font partie d'un système embarqué 3 destiné à la traduction et à l'affichage d'informations textuelles issues de l'environnement routier 4 du véhicule 1.

Comme illustré sur la [Fig.1], le système embarqué 3 interagit directement avec l'environnement routier 4 grâce à un module de prise de vues 5.

Le module de prise de vues 5 comprend un réseau de caméras embarquées 6 placées sur le véhicule 1.

Les caméras embarqués 6 peuvent être placées tout autour du véhicule 1, à l'avant, à l'arrière et sur les côtés, afin d'assurer une couverture visuelle optimale de l'environnement routier 4.

Le module de prise de vues 5 permet d'acquérir des données visuelles 7, en particulier des flux vidéo ou des images, issues de l'environnement routier 4.

L'environnement routier 4 désigne l'ensemble des éléments visibles autour du véhicule 1, tels que les infrastructures, objets ou marquages présents sur ou à proximité de la chaussée.

De plus, les panneaux de signalisation 8 constituent également des sources essentielles d'informations pour le conducteur, lui permettant de comprendre les règles de circulation et les indications particulières propres à la zone traversée.

Les panneaux de signalisation 8 peuvent se répartir en deux catégories principales : les panneaux réglementaires 8a et les panneaux informatifs 8b.

Les panneaux réglementaires 8a imposent des règles strictes que le conducteur doit respecter pour assurer la sécurité et la fluidité du trafic. Ils incluent notamment les limitations de vitesse, interdictions, obligations de direction et panneaux de priorité.

Les panneaux règlementaires 8a peuvent varier selon les pays et nécessitent une reconnaissance rapide pour une prise de décision immédiate.

En revanche, les panneaux informatifs 8b fournissent des indications complémentaires non contraignantes, telles que les distances, sorties, parkings ou restrictions temporaires liées à des travaux ou événements.

Le module de prise de vues 5 se concentre ainsi sur l'acquisition et la transmission de données visuelles 7 issues de l'environnement routier 4 du véhicule 1 aux modules de traitement du système embarqué 3, détaillés dans la suite de la description.

Les données visuelles 7 y seront ensuite exploitées pour extraire et traiter les informations pertinentes pour la conduite et la prise de décision du conducteur.

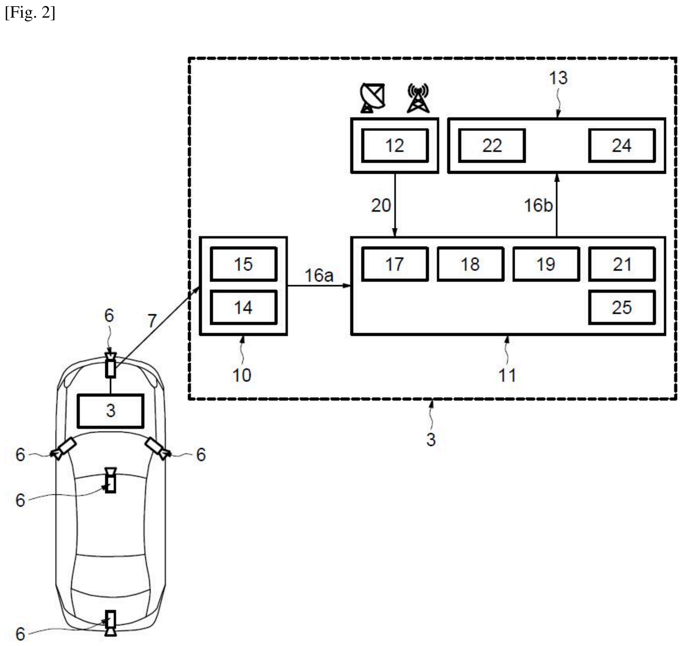

La [Fig.2] illustre un premier mode de réalisation du système embarqué 3, dans lequel les données visuelles 7 acquises par le module de prise de vues 5 sont analysées et transformées en informations exploitables par le conducteur.

Le système embarqué 3 comprend plusieurs modules, à savoir un module d'analyse 10, un module de gestion multimédia 11, un module de géolocalisation 12 et un module d'affichage 13.

Le module d'analyse 10 permet de traiter les données visuelles 7, en particulier les flux vidéo acquis par le module de prise de vues 5.

Pour ce faire, le module d'analyse 10, implémenté sous la forme d'un calculateur, intègre un déserialiseur 14 pour convertir les signaux vidéo bruts des données visuelles 7 en un format exploitable pour les étapes de traitement ultérieures du système embarqué 3.

Dans ce mode de réalisation, le module d'analyse 10 peut intégrer des dispositifs d'aide à la conduite 15, conçus pour améliorer la sécurité et le confort du conducteur.

Les dispositifs d'aide à la conduite 15 peuvent notamment alerter le conducteur en cas de danger et, dans certains cas, intervenir par des actions correctives.

Ces dispositifs d'aide à la conduite 15 comprennent le plus souvent des dispositifs de surveillance de l'environnement routier 4, notamment pour la détection des panneaux de signalisation 8a,8b.

Ces dispositifs d'aide à la conduite 15 permettent entre autres l'identification de l'emplacement des informations textuelles 16 des panneaux de signalisation 8.

Les informations textuelles détectées 16a par le module d'analyse 10 correspondent aux textes identifiés sur les panneaux de signalisation 8, qu'il s'agisse d'indications réglementaires, comme une limitation de vitesse, ou d'informations complémentaires, telles que les indications de parking ou les messages contextuels.

Une fois ces informations textuelles 16a extraites, elles sont transmises au module de gestion multimédia 11 pour un traitement avancé.

Le module de gestion multimédia 11 assure plusieurs fonctions essentielles, notamment la traduction des informations textuelles détectées 16a et leur restitution sous la forme d'informations textuelles traduites 16b.

Le module de gestion multimédia 11, également implémenté sous la forme d'un calculateur, est structuré autour de plusieurs sous-modules fonctionnels.

Le module de gestion multimédia 11 comprend une mémoire tampon 17 pour le stockage temporaire des données visuelles 7 acquises par le module de prise de vues 5.

La mémoire tampon 17 peut, par exemple, stocker l'intégralité d'un roulage ou conserver une durée prédéfinie des données visuelles 7 acquises pendant le roulage, offrant ainsi au conducteur la possibilité de consulter des informations textuelles 16 pertinentes en différé.

De cette façon, il devient possible de rembobiner et d'accéder aux informations textuelles détectées 16a et traduites 16b a posteriori, même après leur acquisition initiale.

Un sous-module de reconnaissance de textes 18, reposant sur des algorithmes d'intelligence artificielle, est conçu pour analyser et interpréter les informations textuelles détectées 16a dans divers alphabets.

Par exemple, le sous-module de reconnaissance de textes 18 peut s'appuyer sur une base de données d'apprentissage spécialisée dans les environnements routiers, afin de proposer des traductions particulièrement adaptées à l'environnement routier 4 du véhicule 1.

Le sous-module de reconnaissance de textes 18 peut également intégrer un dictionnaire du code de la route spécifique à chaque pays, afin de restreindre les traductions au vocabulaire pertinent.

Cette approche contribue à réduire les erreurs liées à la détection et à la traduction des informations textuelles 16 issues de l'environnement routier 4, tout en garantissant une meilleure précision et fiabilité dans l'interprétation des panneaux de signalisation 8 et des informations textuelles 16 associées.

Le module de gestion multimédia 11 comprend aussi un sous-module de traduction multilingue 19 pour adapter les informations textuelles détectées 16a à une langue définie par l'utilisateur, ou en tenant compte de paramètres contextuels 20 fournis par un module de géolocalisation 12, qui sera décrit dans la suite de la description.

En outre, le module de gestion multimédia 11 peut inclure un sous-module de gestion des préférences utilisateur 25, stockant dans une mémoire non volatile, des paramètres contextuels 20 tels que la langue préférentielle de l'utilisateur ou des données liées aux zones fréquemment parcourues.

Ainsi, la traduction des informations textuelles détectées 16a depuis les données visuelles 7 s'effectuera en tenant compte de la langue cible, définie selon les préférences linguistiques configurées par l'utilisateur.

Le module de gestion multimédia 11 comprend ensuite un sous-module de superposition 21, conçu pour intégrer les informations textuelles traduites 16b aux flux vidéo ou images issus des données visuelles 7 acquises par le module de prise de vues 5.

Le sous-module de superposition 21 permet d'assurer le positionnement précis des informations textuelles traduites 16b en tenant compte de la taille, de l'emplacement et du format des informations textuelles originaux détectés 16a par le module d'analyse 15.

La structure du sous-module de superposition 21 peut par exemple reposer sur un algorithme d'alignement permettant d'ancrer les informations textuelles traduites 16b à leur emplacement d'origine sur les données visuelles 7 traitées.

Le sous-module de superposition 21 peut aussi intégrer une gestion de la transparence et du contraste pour garantir une lisibilité optimale, sans altérer les éléments visuels du panneau de signalisation 8.

Par exemple, l'information textuelle traduite 16b peut être affichée sous différentes formes, notamment sous un encadré semi-transparent superposé aux données visuelles 7, assurant ainsi une restitution visuelle claire et intuitive sans masquer les informations essentielles de l'environnement routier 4.

Le système embarqué 3 comprend ensuite un module de géolocalisation 12, précédemment cité, permettant l'identification du pays où circule le véhicule 1 et d'optimiser la précision des traductions des informations textuelles détectées 16a.

Cette identification peut se faire selon un code pays découlant de la norme ISO 3166.

Cette indentification peut aussi se faire à partir de la position GPS du véhicule 1, où les coordonnées géographiques sont corrélées avec une carte simplifiée contenant uniquement les frontières nationales.

Alternativement, en cas d'absence de signal GPS, l'identification du pays dans lequel se trouve le véhicule peut alors être effectuée par le réseau cellulaire, c'est-à-dire que le pays est déterminé à partir des données du réseau mobile via une option d'itinérance.

Ainsi, les paramètres contextuels 20 fournis par le module de géolocalisation 12 permettent la reconnaissance de la langue source à partir de laquelle la traduction va pouvoir s'opérer.

Les paramètres contextuels 20 obtenus sont ensuite transmis aux autres modules du système embarqué 3 afin de garantir une adaptation dynamique des traductions aux règles et spécificités locales, y compris dans des contextes transfrontaliers ou lors de déplacements fréquents.

De plus, le module d'affichage 13 du système embarqué 3 permet ensuite l'intégration et l'affichage des informations textuelles détectées 16a et traduites 16b, à partir des données visuelles 7 acquises par le module de prise de vues 5 au conducteur.

Le module d'affichage 13 regroupe les différents dispositifs visuels du véhicule 1, par exemple un écran central 22 ou bien une interface d'affichage conducteur 23 pouvant être un tableau de bord numérique ou encore un affichage tête haute.

L'écran central 22 est généralement un écran tactile intégré au tableau de bord, conçu pour afficher les données visuelles 7 acquises par les caméras embarqués 6 du module de prise de vues 5, notamment les flux vidéo des différents angles du véhicule, ainsi que les informations textuelles détectées 16a et traduites 16b.

L'utilisateur peut interagir directement avec cet écran central 22 depuis une interface de contrôle 24.

L'interface de contrôle 24 associé à l'écran central 22 permet notamment de sélectionner une caméra 6 spécifique à un angle de vue, agrandir une zone spécifique des données visuelles 7 affichées grâce à des fonction de zoom, ou activer la traduction pour visualiser les informations textuelles traduites 16b en superposition sur les données visuelles 7 affichées.

Le tableau de bord numérique 23, situé derrière le volant, sert notamment à la restitution des informations essentielles à la conduite, telles que la vitesse, les limitations de vitesse ou les instructions de navigation.

Selon les configurations du véhicule 1, ces informations peuvent également être affichées sur un dispositif d'affichage tête haute 23, projetées directement dans le champ de vision du conducteur sur le pare-brise.

Ces différentes options d'affichage permettent de garantir une consultation intuitive des informations critiques, améliorant ainsi la sécurité tout en réduisant les distractions.

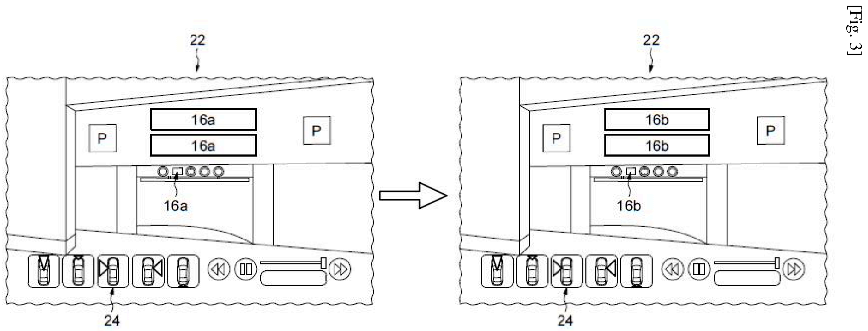

La [Fig.3] illustre le fonctionnement du système embarqué 3 dans le cadre du premier mode d'affichage, où les informations textuelles détectées 16a et traduites 16b sont prioritairement dirigées vers l'écran central 22 du véhicule 1.

Ce mode de réalisation est particulièrement adapté aux environnements où le véhicule 1 circule à faible vitesse ou est à l'arrêt, comme dans un parking, un péage ou une zone urbaine dense, offrant ainsi au conducteur le temps nécessaire pour consulter les informations textuelles traduites 16b et interagir avec l'écran central 22.

Le procédé mis en œuvre par le système embarqué 3 débute par l'acquisition des données visuelles 7 par le module de prise de vues 5, par exemple des flux vidéo ou images de l'environnement routier 4 du véhicule 1 à l'aide des caméras embarquées 6.

Ces données visuelles 7, contenant notamment les panneaux de signalisation 8, sont ensuite transmises au module d'analyse 10 pour traitement.

Le module d'analyse 10 identifie les panneaux de signalisation 8 et extrait les informations textuelles détectées 16a qui leur sont associées.

Les informations textuelles détectées 16a peuvent inclure des sous-inscriptions spécifiques aux panneaux réglementaires 8a, telles que des limitations de vitesse ou des interdictions de circulation, ainsi que des messages contextuels issus des panneaux informatifs 8b, comme des indications de parking ou des restrictions temporaires.

Une fois extraites, les informations textuelles détectées 16a sont transmises au module de gestion multimédia 11, qui en assure la traduction dans la langue configurée par l'utilisateur.

Cette opération est réalisée en tenant compte des paramètres contextuels 20, notamment la géolocalisation et la langue source du pays traversé, fournis par le module de géolocalisation 12.

Le module de gestion multimédia 11 génère ainsi les informations textuelles traduites 16b, prêtes à être intégrées aux flux vidéo ou images issues des données visuelles 7.

L'intégration des informations textuelles traduites 16b est réalisée par le sous-module de superposition 21 du module de gestion multimédia 11.

Le sous-module de superposition 21 assure l'affichage des informations textuelles traduites 16b en maintenant leur position, leur taille et leur mise en forme d'origine, afin de garantir une lisibilité optimale sans masquer les éléments visuels des panneaux de signalisation 8.

L'écran central 22 permet alors au conducteur de consulter ces informations traduites 16b et d'interagir avec une interface de contrôle 24, comportant des fonctionnalités interactives telles que le zoom, le rembobinage ou la pause.

Ce procédé d'affichage interactif offre au conducteur la possibilité de revoir en différé des informations textuelles détectées 16a qu'il aurait pu manquer ou d'examiner des détails spécifiques.

En particulier, dans un contexte où les informations contextuelles influencent directement la navigation, telles que les restrictions de stationnement ou les horaires d'accès, cette approche permet une meilleure compréhension de l'environnement routier 4.

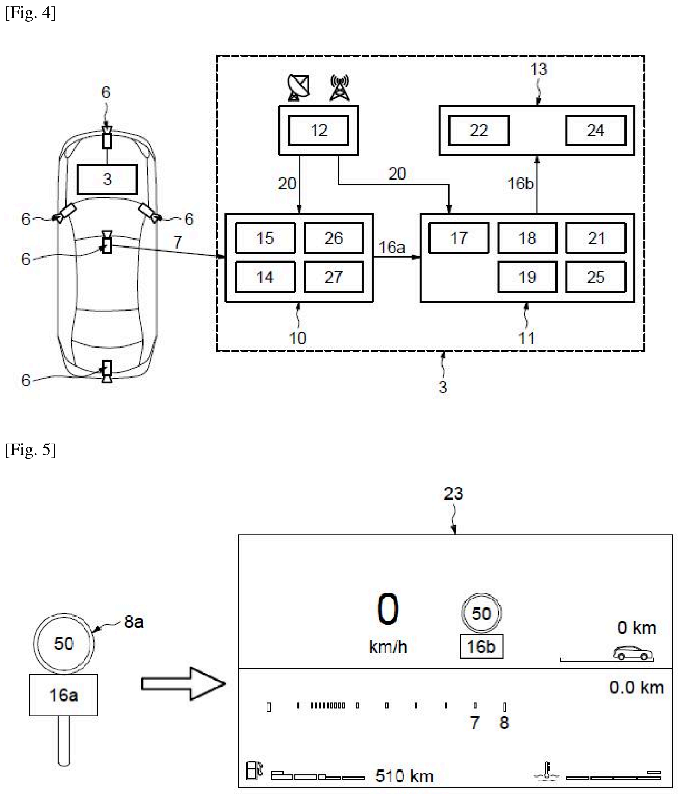

La [Fig.4] représente un second mode de réalisation du système embarqué 3, particulièrement adapté aux situations où le véhicule 1 évolue à vitesse élevée, comme sur une autoroute ou une route principale.

Dans ce mode de réalisation, l'affichage des informations textuelles traduites 16b est transféré vers des dispositifs directement dans le champ de vision du conducteur, tels que le tableau de bord numérique ou l'affichage tête haute 23, garantissant ainsi un accès rapide et direct aux informations critiques.

Dans ce contexte, les informations textuelles détectées 16a et traduites 16b concernent exclusivement les panneaux réglementaires 8a, tels que les limitations de vitesse et les interdictions, afin d'éviter toute surcharge d'informations et de limiter les distractions pour le conducteur.

Contrairement au premier mode de réalisation précédemment décrit, les panneaux informatifs 8b ne sont pas pris en compte, car leur consultation nécessiterait une interaction prolongée incompatible avec la conduite à vitesse élevée.

Dans ce contexte, les modules du système embarqué 3 conservent la même structure générale et des fonctions similaires à celles décrites pour le premier mode de réalisation.

Seules certaines variantes structurelles et fonctionnelles des modules 10,11,12,13 du système embarqué 3 ont été introduites pour répondre aux exigences spécifiques de ce second mode de réalisation, et seront détaillées ci-après.

Le module d'analyse 10 se distingue par une structure étendue intégrant un sous-module de filtrage contextuel 26, conçu pour isoler exclusivement les panneaux réglementaires 8a parmi l'ensemble des panneaux de signalisation 8 détectés dans les données visuelles 7 acquises par le module de prise de vues 5.

Par exemple, le sous-module de filtrage contextuel 26 peut comprendre une base de données embarquée répertoriant les modèles de panneaux de signalisation selon les réglementations internationales et nationales.

Le filtrage contextuel repose également sur l'évaluation des paramètres contextuels 20, tels que la vitesse du véhicule et sa localisation, afin de privilégier les informations essentielles à la conduite.

Le module d'analyse 11 intègre également un sous-module d'encodage de données visuelles 27 permettant d'encoder les données visuelles 7 acquises par le module de prise vues 5 au format UTF-8.

L'encodage des données visuelles 7 au format UTF-8 permet une normalisation des informations textuelles traduites 16b, réduisant ainsi le temps de traitement et évitant toute incompatibilité entre les modules du système embarqué 3.

L'encodage des données visuelles 7 assure une transmission fluide et une intégration instantanée des informations dans l'interface d'affichage conducteur 23, optimisant ainsi la rapidité et la fiabilité de l'affichage des panneaux réglementaires 8a.

Dans cette variante, le module de gestion multimédia 11 comprend un sous-module de remplacement des informations textuelles 28, qui insère directement les informations textuelles traduites 16b dans les panneaux de signalisation 8a affichés sur le tableau de bord ou l'affichage tête haute 23.

Contrairement au premier mode de réalisation du système embarqué 3, dans lequel les informations textuelles traduites 16b sont superposées aux flux vidéo ou aux images issues des données visuelles 7, le sous-module de remplacement des informations textuelles 28 permet de remplacer visuellement l'information textuelle d'origine détectée 16a par l'information textuelle traduite 16b, garantissant une lisibilité immédiate et intuitive.

Une telle opération peut être réalisée par un algorithme de segmentation d'images combiné à un moteur de reconnaissance de texte, qui identifie précisément la zone contenant l'information textuelle détectée 16a.

Une fois cette zone localisée, le sous-module de remplacement des informations textuelles 28 peut appliquer un masque numérique pour effacer l'information textuelle d'origine détecté 16a et y insérer l'information textuelle traduite 16b, tout en conservant la police, la taille et la mise en forme du texte initial afin d'assurer une intégration visuelle cohérente avec le panneau de signalisation réglementaire 8a affiché sur le tableau de bord ou l'affichage tête haute 23.

Enfin, le module d'affichage 10 oriente ici les informations textuelles traduites 16 en temps réel vers le tableau de bord numérique ou l'affichage tête haute 23 pour un affichage simplifié et non interactif afin de minimiser les distractions et de garantir une lisibilité immédiate des informations critiques.

Ce mode de réalisation n'est pas lié à des systèmes critiques pour la sécurité, et est conçu pour fonctionner de manière indépendante des autres fonctions sécuritaires, comme la gestion des alertes ou voyants de sécurité.

Cette séparation dans l'architecture logicielle du système embarqué 3 garantit que le traitement des informations textuelles traduites 16b affichées ne perturbe pas le fonctionnement des systèmes essentiels à la sécurité du véhicule 1.

Ces adaptations du système embarqué 3 répondent aux exigences de conduite rapide, où le conducteur ne peut pas interagir avec les informations affichées mais doit pouvoir les consulter instantanément.

L'affichage des informations textuelles traduites 16b dans ce mode de réalisation est ainsi optimisé pour fournir des indications claires et sans ambiguïté, tout en évitant toute interférence avec les fonctions sécuritaires du véhicule 1.

La [Fig.5] illustre un second mode d'affichage, dans lequel les informations textuelles traduites 16b sont intégrées et affichées sur le tableau de bord ou l'affichage tête haute 23.

Ce mode de réalisation permet au conducteur d'accéder rapidement aux informations critiques, comme les limitations de vitesse ou les interdictions de circulation, sans détourner son attention de la route.

Dans cette configuration, le module d'analyse 10 isole les informations textuelles détectées 16a des panneaux réglementaires 8a et les transmet au module de gestion multimédia 11, qui en effectue la traduction en fonction des paramètres contextuels 20.

Une fois traduites, ces informations textuelles 16b sont affichées en temps réel sous une forme optimisée pour garantir une lisibilité immédiate.

Contrairement au premier mode d'affichage, ici le mode d'affichage décrit ne permet pas d'interactions avancées comme le zoom ou le rembobinage, car la priorité est donnée à la restitution rapide des données.

L'affichage des informations textuelles traduites 16b étant dissocié des autres systèmes critiques du véhicule 1, il ne compromet pas les fonctionnalités sécuritaires essentielles, comme la gestion des alertes ou des voyants de sécurité. Cette séparation assure une intégration fluide dans l'interface utilisateur du véhicule 1 tout en garantissant que les informations fournies restent exclusivement destinées à l'aide à la conduite

Ainsi, l'adaptation du système embarqué 3 permet de répondre aux exigences de la conduite à vitesse élevée, en concentrant l'affichage des informations textuelles traduites 16b sur des dispositifs optimisés pour une lecture immédiate, favorisant une prise de décision rapide et sécurisée.

## Revendications

1. Système embarqué (3) pour véhicule automobile (1), comprenant:
- au moins un module de prise de vues (5) configuré pour acquérir des données visuelles (7) d'un environnement routier (4),
- au moins un module d'analyse (10) configuré pour détecter des informations textuelles (16a) à partir des données visuelles (7) acquises et transmettre lesdites informations textuelles (16a) à au moins un module de gestion multimédia (11),
- au moins un module de gestion multimédia (11) configuré pour recevoir les informations textuelles détectées (16a), traduire lesdites informations textuelles détectées (16a) en fonction d'une langue cible déterminée par au moins un module de géolocalisation (12), et transmettre les informations textuelles traduites (16b) à au moins un module d'affichage (13),
- au moins un module de géolocalisation (12) configuré pour déterminer une langue source pour la traduction des informations textuelles détectées (16a) à partir de paramètres contextuels (20) liés au véhicule (1), et
- au moins un module d'affichage (13) configuré pour recevoir et afficher les informations textuelles traduites (16b) en fonction desdits paramètres contextuels (20) liés au véhicule (1).

2. Système selon la revendication 1, **caractérisé en ce que** les paramètres contextuels (20) comprennent au moins la vitesse du véhicule (1), les données de géolocalisation, ou la nature de l'environnement routier (4).

3. Système selon l'une quelconque des revendications 1 et 2, dans lequel le module d'affichage (13) comprend :
- un écran central (22) configuré pour permettre un accès en différé aux données visuelles acquises (7) et aux informations textuelles traduites (16b), et/ou
- une interface d'affichage conducteur (23) configurée pour afficher en temps réel les informations textuelles traduites (16b) associées aux panneaux de signalisation réglementaires (8a) détectés.

4. Système selon l'une quelconque des revendications 1 à 3, dans lequel le module d'analyse (10) comprend un sous-module de filtrage contextuel (26) configuré pour sélectionner les panneaux réglementaires (8a) parmi l'ensemble des panneaux de signalisation (8) détectés dans les données visuelles (7), en fonction des paramètres contextuels (20).

5. Système selon l'une quelconque des revendications 1 à 4, **caractérisé en ce que** le module d'analyse (10) comprend un sous-module d'encodage de données visuelles (27), configuré pour encoder les informations textuelles détectées (16a) dans un format standardisé.

6. Système selon l'une quelconque des revendications 1 à 5, **caractérisé en ce que** le module de gestion multimédia (11) comprend une mémoire tampon (17) pour permettre l'enregistrement des données visuelles acquises (7) et des informations textuelles détectées (16a) et un accès différé aux informations textuelles traduites (16b) depuis le module d'affichage (13).

7. Système selon l'une quelconque des revendications 1 à 6, dans lequel le module de gestion multimédia (11) comprend un sous-module de remplacement des informations textuelles (28), configuré pour identifier une zone contenant l'information textuelle détectée (16a) dans les données visuelles (7) acquises par le module de prise de vues (5) et remplacer l'information textuelle détectée (16a) par l'information textuelle traduite (16b) en appliquant un masque numérique sur la zone détectée.

8. Système selon la revendication 3, dans lequel l'écran central (22) du module d'affichage (13) comprend une interface de contrôle (24) permettant de sélectionner les données visuelles acquises (7) par l'au moins un module de prise de vues (5), de naviguer dans les données visuelles acquises (7) via des commandes de rembobinage et d'avance rapide, de zoomer sur les informations textuelles détectées (16a), et
d'activer ou désactiver la traduction des informations textuelles détectées (16a).

9. Procédé de traitement et de traduction d'informations textuelles (16) issues d'un environnement routier (4), mis en œuvre par un système embarqué (3) selon l'une quelconque des revendications 1 à 8, ledit procédé comprenant les étapes suivantes :
- acquérir des données visuelles (7) d'un environnement routier (4) à l'aide d'au moins un module de prise de vues (5),
- analyser les données visuelles (7) à partir d'au moins un module d'analyse (10) pour détecter des informations textuelles (16a),
- transmettre les informations textuelles détectées (16a) à au moins un module de gestion multimédia (11),
- traduire les informations textuelles détectées (16a) à partir des paramètres contextuels (20) reçus d'au moins un module de géolocalisation (12),
- transmettre les informations textuelles traduites (16b) à au moins un module d'affichage (13),
- afficher les informations textuelles traduites (16b) en fonction desdits paramètres contextuels (20).

10. Véhicule (1) automobile comprenant un système embarqué (3) selon l'une quelconque des revendications 1 à 8.
